(19) Europäisches Patentamt
European Patent Office
Office européen des brevets

(11) **EP 2 436 092 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(21) Anmeldenummer: **10721450.4**

(22) Anmeldetag: **12.05.2010**

(51) Int Cl.:
*H02J 3/01* (2006.01)    *H02M 1/15* (2006.01)
*H02M 1/12* (2006.01)

(86) Internationale Anmeldenummer:
**PCT/EP2010/056543**

(87) Internationale Veröffentlichungsnummer:
**WO 2010/136335 (02.12.2010 Gazette 2010/48)**

(54) **VORRICHTUNG ZUR KOMPENSATION VON OBERSCHWINGUNGEN**

DEVICE FOR COMPENSATING HARMONICS

DISPOSITIF DE COMPENSATION D'HARMONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **27.05.2009 DE 102009023626**

(43) Veröffentlichungstag der Anmeldung:
**04.04.2012 Patentblatt 2012/14**

(73) Patentinhaber: **Siemens Aktiengesellschaft 80333 München (DE)**

(72) Erfinder:
• **PIESCHEL, Martin 90473 Nürnberg (DE)**
• **LIU, Steven 67663 Kaiserslautern (DE)**

(56) Entgegenhaltungen:
**EP-A1- 1 253 694      US-A- 5 757 099
US-A1- 2003 169 109      US-A1- 2005 035 815**

**Beschreibung**

Die Erfindung betrifft eine Vorrichtung zur Kompensation von in Stromverläufen auftretenden Oberschwingungen in einem Hochspannungsnetz mit einem passiven Filter und einer steuerbaren Spannungsquelle, die über das passive Filter mit dem Hochspannungsnetz in Parallelschaltung verbindbar ist, und mit einer Regelungseinheit, die in Abhängigkeit der erfassten Oberschwingungen einen Sollstrom $i_{Soll}$ ermittelt, welcher der negativen zu kompensierenden Oberschwingung entspricht, wobei der Sollstrom $i_{Soll}$ mit einem von der steuerbaren Spannungsquelle erzeugten Kompensationsstrom $i_{Komp}$ unter Gewinnung einer Regeldifferenz verglichen wird und die Regeldifferenz einem über Reglerparameter in seinem dynamischen Verhalten einstellbaren Regler zugeführt wird, der an seinem Ausgang eine Stellspannung $u_{Komp}$ für die steuerbare Spannungsquelle bereitstellt, so dass diese einen Kompensationsstrom $i_{Komp}$ treibt, der dem Sollstrom $i_{Soll}$ möglichst entspricht.

Die Erfindung betrifft ferner ein Verfahren zur Kompensation von in Stromverläufen auftretenden Oberschwingungen in einem Hochspannungsnetz mittels einer steuerbaren Spannungsquelle, die über ein passives Filter in Parallelschaltung mit dem Hochspannungsnetz verbunden ist, bei dem ein die Oberschwingungen kompensierender Sollstrom $i_{Soll}$ ermittelt, der Sollstrom $i_{Soll}$ mit einem von der steuerbaren Spannungsquelle erzeugten Kompensationsstrom $i_{Komp}$ unter Gewinnung einer Regeldifferenz verglichen und die Regeldifferenz einem über Reglerparameter in seinem dynamischen Verhalten einstellbaren Regler zugeführt wird, der an seinem Ausgang eine Stellspannung $u_{Komp}$ für die steuerbare Spannungsquelle bereitstellt, so dass diese einen Kompensationsstrom $i_{Komp}$ treibt, der dem Sollstrom $i_{Soll}$ möglichst entspricht.

Eine solche Vorrichtung und ein solches Verfahren sind aus der US 2003/169109 A1 bereits bekannt. Die dort beschriebene Vorrichtung ist zur Kompensation von in Stromverläufen auftretenden Oberschwingungen vorgesehen, die in einem Hochspannungsnetz auftreten können. Dazu Vorrichtung weist sie einen passiven Filter und eine steuerbare Spannungsquelle auf, die über das passive Filter mit dem Hochspannungsnetz in Parallelschaltung verbunden ist. Zum Schutz und zur Steuerung der steuerbaren Spannungsquelle dient eine Regelungseinheit, die in Abhängigkeit der erfassten Oberschwingungen einen Sollstrom ermittelt, welcher der negativen, zu kompensierenden Oberschwingung entspricht. Der Sollstrom wird mit einem von der steuerbaren Spannungsquelle erzeugten Kompensationsstrom unter Gewinnung einer Regeldifferenz verglichen. Die Regeldifferenz wird einem Regler zugeführt, dessen dynamisches Verhalten über Regelparameter einstellbar ist. Der Regler stellt an seinem Ausgang eine Stellspannung für die steuerbare Spannungsquelle bereit, so dass dieser einen Kompensationsstrom treibt, der dem Sollstrom möglichst entspricht.

Auch die US 5,757,099 A offenbart eine steuerbare Spannungsquelle, die auch als STATCOM bezeichnet werden kann, wobei die steuerbare Spannungsquelle über ein passives Filter mit einem Wechselspannungsnetz verbunden ist.

Weitere vorbekannte Vorrichtungen und Verfahren sind in der US 2005/035815 A1 und in der EP 1 253 694 beschrieben.

Aus der DE 102 44 056 B3 ist ein Verfahren zum Erzeugen eines Satzes von Steuersignalen für einen Umrichter eines aktiven Filters zur Kompensation von Oberschwingungen bekannt. In einem ersten Schritt wird gemäß dem vorbekannten Verfahren der Strom, welcher die zu kompensierende Oberschwingung umfasst, gemessen. Das gemessene analoge Stromsignal wird anschließend digitalisiert und der Grundschwingungsanteil aus den Messsignalen eliminiert. Auf die Messwerte wird eine transformierte Regelfunktion des PI-Reglers angewandt. Die Ausgangsgrößen des PI-Reglers werden anschließend aufsummiert, wobei diese Summe als Sollstromwert an die Regeleinrichtung eines IGBT-Umrichters übertragen wird.

Die DE 10 2004 019 518 A1 beschreibt ebenfalls ein Verfahren und eine Vorrichtung zur Optimierung der Regelung einer steuerbaren Spannungsquelle. Insbesondere ist dort ausgeführt, dass die dreiphasig erfassten Messsignale des Verbraucherstromes mit Hilfe einer Clark-Transformation in zwei Messwerte $\alpha$, $\beta$ umgewandelt werden, die dann anschließend mit Hilfe einer Park-Transformation in ein rotierendes Koordinatensystem übertragen werden, so dass bei der Regelung lediglich Gleichgrößen zu berücksichtigen sind.

In der WO 99/67868 ist eine Vorrichtung zur Kompensation von Oberschwingungen beschrieben, wobei die besagte Vorrichtung ein aktives Filter, also eine steuerbare Spannungsquelle, und ein passives Filter aufweist, wobei das aktive Filter über das passive Filter mit einer Hochspannungsleitung in Parallelschaltung verbunden ist.

Die eingangs genannte Vorrichtung und das gattungsgemäße Verfahren weisen den Nachteil auf, dass Eigenschwingungen des passiven Filters bei der Regelung nicht berücksichtigt werden. Dies hat sich in sofern als nachteilig herausgestellt, als Regler, denen mit Hilfe von Stellparametern eine hochdynamische Charakteristik aufgeprägt wurde, ein instabiles Regelverhalten zeigten. Diesem Problem wurde durch die Einstellung einer langsameren Regelungscharakteristik begegnet. Typischerweise liegt die Kompensationszeit bei mehr als drei Netzperioden.

Aufgabe der Erfindung ist es, eine Vorrichtung und einem Verfahren der eingangs genannten Art bereitzustellen, die eine stabile hochdynamische Regelung der Oberschwingungskompensation ermöglichen.

Die Erfindung löst diese Aufgabe dadurch, dass die Regelungseinheit Mittel zum Modellieren der Dynamik des passiven Filters aufweist, und dass die Mittel zum Modellieren der Dynamik des passiven Filters Reglerparameter bereitstellen, wobei der Regler mit Hilfe der Reglerparameter so eingestellt ist, dass Eigenschwingungen des passiven Filters vermieden werden.

Ausgehend von dem eingangs genannten Verfahren löst die Erfindung die Aufgabe dadurch, dass die dynamischen Eigenschaften des passiven Filters modelliert werden und die Reglerparameter auf der Grundlage der berechneten dynamischen Eigenschaften des passiven Filters fortwährend so hergeleitet werden, dass Eigenschwingungen des passiven Filters vermieden sind.

Erfindungsgemäß wird zur Kompensation der Oberschwingung die Dynamik des passiven Filters, über das die steuerbare Spannungsquelle oder mit anderen Worten das aktive Filter, mit der Hochspannungsleitung verbunden ist, modelliert. Die Erfindung basiert auf der Überlegung, dass aufgrund transienter Effekte mögliche Eigenschwingungen des passiven Filters berücksichtigt werden müssen. Dies gelingt dadurch, dass das Verhalten des passiven Filters modelliert wird. Die Mittel zum Modellieren der Filterdynamik stellen ausgangsseitig Regelparameter bereit, mit denen der bei der Regelung verwendete Regler so eingestellt wird, dass trotz einer gewünschten schnellen Reaktionszeit der Regelung Instabilitäten vermieden sind. Auf diese Art und Weise kann der Regler sicher und gleichzeitig schnell reagieren. Die Kompensationszeit, also die Zeit in der die Regelung eine detektierte Oberschwingung kompensiert, liegt im Rahmen der Erfindung deutlich innerhalb einer Netzperiode, wobei von einer Grundfrequenz der Netzspannung von 50 Hz oder 60 Hz ausgegangen wird. Erfindungsgemäß ist es keineswegs mehr notwendig, wie beim Stand der Technik, den Regler so einzustellen, dass dieser eine langsame Dynamik aufweist, womit das Auftreten von Eigenschwingungen im passiven Filter ebenfalls vermieden wurde.

Im Betrieb ist die erfindungsgemäße Vorrichtung der Last parallel geschaltet.

Zweckmäßigerweise weist die Regelungseinheit Zustandserfassungsmittel auf, die einen Istzustand des passiven Filters erfassen. Solche Regelungserfassungsmittel sind beispielsweise Messsensoren, die beispielsweise Ströme, die in Spulen des passiven Filters auftreten, oder Spannungen, erfassen, die an Kondensatoren oder anderen kapazitiven Bauteilen des passiven Filters abfallen. Die besagten Messwerte werden im Rahmen einer zweckmäßigen Ausgestaltung der Erfindung üblicherweise in einem Zustandsvektor zusammengefasst. Abweichend hiervon berechnen die Zustandserfassungsmittel ausgehend von anderen Messgrößen, welche für die Regelung ohnehin vorliegen, wie beispielsweise Kompensationsstrom und Stellspannung, den Istzustand des passiven Filters.

Vorteilhafterweise verfügt die steuerbare Spannungsquelle über einen Umrichter mit abschaltbaren Leistungshalbleitern. Solche steuerbaren Spannungsquellen werden im Stand der Technik auch als StatCom, SVC Light oder SVC Plus bezeichnet. Hierbei kommt ein Umrichter zum Einsatz, der beispielsweise aus Stromrichterventilen zusammengesetzt ist, die in einer Brückenschaltung, beispielsweise 6-Puls-Brückenschaltung, miteinander verbunden sind. Jedes Stromrichterventil weist einen Wechselspannungs- sowie einen Gleichspannungsanschluss auf, wobei der Gleichspannungsanschluss mit einem Kondensator oder einer sonstigen Spannungsquelle verbunden ist. Die Stromrichterventile weisen üblicherweise eine Reihenschaltung aus Leistungshalbleitern, wie beispielsweise IGBTs oder GTOs, auf. Der Vorteil dieser Leistungshalbleiter gegenüber Thyristoren besteht darin, dass diese sowohl von einer Sperrstellung, in der ein Stromfluss über den Leistungshalbleiter unterbrochen ist, in eine Durchgangsstellung, in der eine Stromfluss über den Leistungshalbleiter ermöglicht, überführbar sind, als auch umgekehrt von der Durchgangsstellung in die Sperrstellung. Mit anderen Worten sind die Leistungshalbleiter sowohl ein- als auch abschaltbar.

Neben einem zentralen Kondensator auf der Gleichspannungsseite des Umrichters sind auch mehrstufige Umrichter bekannt und beispielsweise in der US 5,642,275 beschrieben. Gemäß dieser Ausgestaltung des Umrichters verfügt jedes Stromrichterventil über eine Reihenschaltung aus bipolaren Submodulen, wobei jedes Submodul vier Leistungshalbleiter und eine Kondensatoreinheit aufweist, die in einer Vollbrückenschaltung miteinander verbunden sind. Am Ausgang jedes Submoduls ist somit wahlweise die an der Kondensatoreinheit abfallende Spannung, eine Nullspannung oder aber die inverse Kondensatorspannung je nach Schaltstellung der Leistungshalbleiter erzeugbar. Die mehrstufige Ausgestaltung des Umrichters ermöglicht eine stufenweise Einstellung der am Stromrichterventil insgesamt abfallenden Spannung.

Gemäß einer vorteilhaften Weiterentwicklung des erfindungsgemäßen Verfahrens werden die dynamischen Eigenschaften des passiven Filters ausgehend von einem Istzustand des passiven Filters modelliert. Der Istzustand des Filters kann beispielsweise durch Messungen am aktiven Filter erfasst werden. Wie bereits ausgeführt wurde, können diese Größen des passiven Filters, also der Strom durch eine Spule des passiven Filters oder die an seinem Kondensator abfallende Spannung, auch ausgehend von anderen Messgrößen hergeleitet werden.

Gemäß einer bevorzugten Weiterentwicklung dieser Ausgestaltung wird der Istzustand des passiven Filters auf der Grundlage von Messungen von Strömen und Stellspannungen bestimmt, die ohnehin für die Regelungseinheit vorliegen. Die Bauteile des passiven Filters sind die üblicherweise für passive Filter verwendeten Bauteile nämlich Kondensatoren und Spulen, die eine geeignete Kapazität beziehungsweise Induktivität aufweisen, so dass durch die Parallel- und/oder Reihenschaltung der besagten Bauteile die gewünschten Filtereigenschaften entstehen. Darüber hinaus kann das passive Filter Ohmsche Widerstände, Ableiter oder dergleichen aufweisen.

Zweckmäßigerweise wird das dynamische Verhalten des passiven Filters zeitdiskret zu konstanten Abtastzeitpunkten k mit Hilfe von Transformationsmatrizen modelliert. Das hierbei zugrunde liegende Modell ist somit ein zeitdiskretes Modell, so dass die üblicherweise zur Berechnung dynamischer Eigenschaften verwendeten Differenzialgleichungen als Differenzengleichungen ausgedrückt werden können. Dies hat den Vorteil, dass auch numerische Lösungsverfahren zur Modellierung eingesetzt werden können. Diese Berechnung kann vor der Reglerimplementierung durchgeführt werden. Die Kompensationszeit der Regelung liegt im Bereich weniger Millisekunden.

Gemäß einer diesbezüglich zweckmäßigen Weiterentwicklung wird das dynamische Verhalten des passiven Filters gemäß

$$\underline{x}^s_{k+1} = \underline{A}^s \, \underline{x}^s_k + \underline{B}^s u_{Komp,k}$$

$$\underline{i}^s_k = \underline{C}^s \, \underline{x}^s_k$$

beschrieben, wobei $\underline{x}^s$ ein Vektor ist, der den Istzustand des passiven Filters beschreibt, $\underline{A}^s$ eine Transformationsmatrix ist, welche die Dynamik der Zustände des passiven Filters beschreibt, $\underline{B}^s$ eine Transformationsmatrix ist, die den Einfluss der Kompensationsspannung $u_{Komp}$ auf die Zustände des passiven Filters beschreibt, und $\underline{C}^s$ eine Transformationsmatrix ist, welche aus den Zuständen des passiven Filters einen ungestörten Strom $\underline{i}^s$ im passiven Filter berechnet.

Ferner wird ein von dem Hochspannungsnetz eingeprägter Strom gemäß

$$\underline{x}^d_{k+1} = \underline{A}^d \, \underline{x}^d_k$$

$$\underline{i}^d_k = \underline{C}^d \, \underline{x}^d_k$$

als Störung berücksichtigt, wobei $\underline{x}^d$ ein Vektor mit Parametern ist, die den störenden Einfluss des Verbraucherstromes $i_{Last}$ auf den Kompensationsstrom $i_{Komp}$ beschreibt, $\underline{A}^d$ eine Transformationsmatrix ist, die das Verhalten der Parameter des störenden Einflusses von $i_{Last}$ auf den Kompensationsstrom $i_{Komp}$ beschreibt, und $\underline{C}^d$ eine Transformationsmatrix ist, die aus den besagten Parametern des störenden Einflusses den zugehörigen *Störstromanteil* $i^d$ im Kompensationsstrom $i_{Komp}$ berechnet, wobei sich der Kompensationsstrom $i_{Komp}$ aus der Summe der des Störstromanteils $i^d$ und des störungsfreien Filterstromes $i^s$ gemäß $i_{Komp} = i^s + i^d$ ergibt.

Das dynamische Verhalten des passiven Filters wird bei der Berechnung der Kompensationsspannung $u_{Komp}$ durch die Lösung folgender Optimierungsaufgabe berücksichtigt:

$$\min_u \sum_{l=1}^{Np} \left( i_{soll,k+l} - i_{Komp,k+l} \right)^2 + \lambda \sum_{l=0}^{Nu} \left( u_{soll,k+l} - u_{Komp,k+l} \right)^2$$

mit:

$$i_{Komp,k+l} = \underline{C}^s \left( \underline{A}^s \right)^l \underline{x}^s_k + \underline{C}^d \left( \underline{A}^d \right)^l \underline{x}^d_k + \sum_{n=0}^{l} \underline{C}^s \left( \underline{A}^s \right)^{-n} \underline{B}^s u_{k+n}$$

$$i_{soll,k+l} = \underline{C}^d \left( \underline{A}^d \right)^l \underline{x}^{soll}_k$$

$$u_{soll,k+l} = \underline{C}^d \left( \underline{A}^d \right)^l \underline{T} x^{soll}_k$$

$$u_{k+n} = \begin{cases} u_{Komp,k+n} \\ u_{soll,k+n} \end{cases} f\ddot{u}r \quad \begin{matrix} n < Nu \\ Nu \leq n \leq Np \end{matrix}'$$

wobei $u_{Soll}$ eine Stellspannung ist, die im ungestörten Fall den zur Kompensation der Oberschwingungen erforderlichen Kompensationsstrom erzeugt, $\underline{x}^{soll}$ ein Vektor ist, der Parameter zur Beschreibung der zu kompensierenden Oberschwingung umfasst, und $\underline{T}$ eine Transformationsmatrix ist, die auf $\underline{x}^{soll}$ angewandt die Stellspannung $u_{Soll}$ für den ungestörten Fall ergibt, wobei vorausgesetzt wird, dass die zu ermittelnde Kompensationsspannung $u_{Komp,k+n}$ nur für die ersten Nu Abtastschritte auf das passive Filter einwirkt und anschließend die störungsfreie Kompensationsspannung $u_{Soll}$. Aufgrund dieser Annahme kann die Rechenzeit erheblich verkürzt werden.

Gemäß einer bevorzugten Ausgestaltung wird die Optimierungsaufgabe unter Berücksichtigung von Stellgrößenbegrenzungen numerisch gelöst, wobei Reglerparameter $K_n$ bereitgestellt werden, die dem Regler zur Anpassung der Regelung zugeführt werden.

Gemäß einer hiervon abweichenden Ausgestaltung der Erfindung wird die Optimierungsaufgabe analytisch gelöst, wobei die zur ermittelnde Kompensationsspannung $u_{Komp}$ gemäß,

$$u_{Komp,k} = K_1 x_k^s + K_2 x_u^a + K_3 x_k^{Soll}$$

berechnet wird und wobei $K_1$, $K_2$ und $K_3$ die Reglerparameter sind, die dem Regler zur Anpassung der Regelungsdynamik zugeführt werden.

Nachfolgend werden Ausführungsbeispiele der Erfindung unter Bezug auf die Figuren der Zeichnung beschrieben, wobei gleich wirkende Bauteile mit gleichen Bezugszeichen versehen sind, und wobei

Figur 1  ein Ausführungsbeispiel der erfindungsgemäßen Vorrichtung schematisch verdeutlicht,
Figur 2  ein Ausführungsbeispiel des erfindungsgemäßen Verfahrens zeigt,
Figur 3  ein weiteres Ausführungsbeispiel der erfindungsgemäßen Vorrichtung schematisch verdeutlicht,
Figur 4  ein Submodul eines Umrichterventils einer steuerbaren Spannungsquelle darstellt und
Figur 5  die Kompensation einer Oberschwingung der Ordnung 15 im Netz- und Laststrom schematisch verdeutlicht.

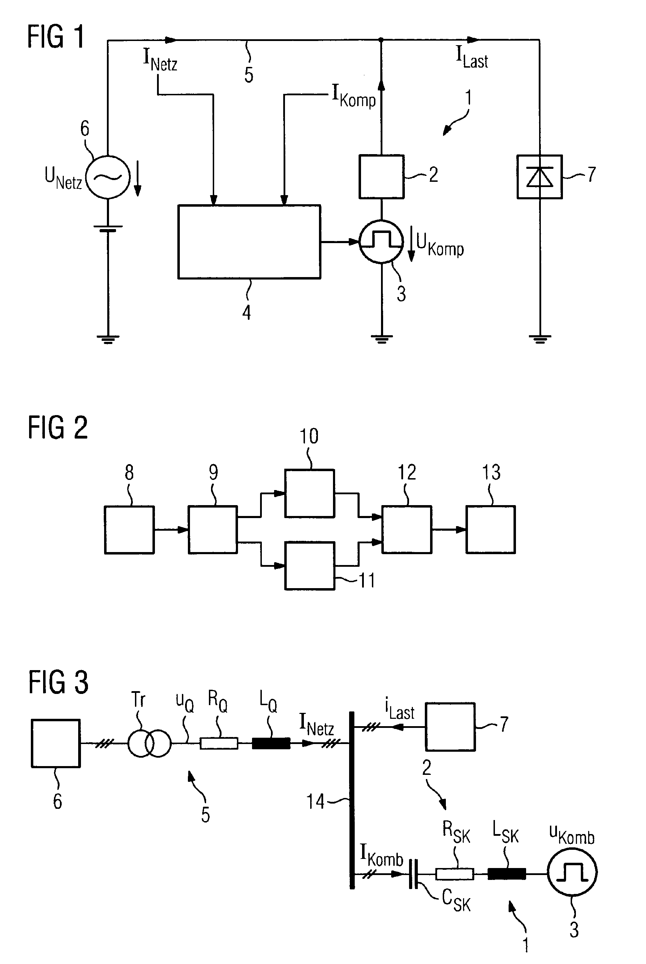

Figur 1 zeigt ein Ausführungsbeispiel der erfindungsgemäßen Vorrichtung 1 in einer schematischen Darstellung. Die Vorrichtung 1 umfasst ein passives Filter 2, eine steuerbare Spannungsquelle 3 sowie eine Regelungseinheit 4 zur Ansteuerung der Spannungsquelle 3. Dabei ist die Vorrichtung 1 an ein elektrisches dreiphasiges Versorgungsnetz 5 angeschlossen, das von einem Generator 6 mit Elektroenergie versorgt ist. In Figur 1 ist aus Gründen der Übersicht nur eine Phase verdeutlicht. Die Vorrichtung 1 ist jedoch dreiphasig. Die vom Generator 6 erzeugte Elektroenergie weist eine Wechselspannung $u_{Netz}$ auf, wobei der im Versorgungsnetz 5 fließende Strom mit $i_{Netz}$ bezeichnet ist. An das elektrische Versorgungsnetz 5 ist wenigstens eine nichtlineare Last 7 angeschlossen, die in einem Versorgungsstrom $i_{Last}$ für Oberschwingungen sorgt, deren Frequenzen ein ganzzahliges Vielfaches der Frequenz der Grundschwingung sind. Die Vorrichtung 1 dient zur Kompensation dieser Oberschwingungen. Dazu wird die unerwünschte Oberschwingung erfasst und die steuerbare Spannungsquelle 3 anschließend so einstellt, dass diese eine Kompensationsspannung $u_{Komp}$ erzeugt, die einen Kompensationsstrom $i_{Komp}$ treibt, der sich mit dem Laststrom $i_{Last}$ so überlagert, dass die Oberschwingungen unterdrückt werden.

Die steuerbare Spannungsquelle 3 ist in Figur 1 nur schematisch angedeutet. Sie umfasst jedoch bei diesem Ausführungsbeispiel einen mehrstufigen Umrichter, wie er beispielsweise in der US 5,642,275 beschrieben ist. Der mehrstufige Umrichter verfügt für jede Phase des dreiphasigen Versorgungsnetzes 5 über einen Ventilzweig, wobei die Ventilzweige in Stern - oder Dreiecksschaltung miteinander verbunden sind. Dabei ist jeder Ventilzweig über das passive Filter 2 an eine Phase des Versorgungsnetzes angeschlossen. Jeder Ventilzweig verfügt seinerseits über eine Reihenschaltung aus bipolaren Submodulen, wobei jedes Submodul einen Energiespeicher sowie eine Leistungshalbleiterschaltung aufweist. Die Leistungshalbleiterschaltung sowie der Energiespeicher bilden miteinander eine so genannte Vollbrücken- oder H-Schaltung aus, so dass insgesamt vier Leistungshalbleiter je Submodul vorgesehen sind. Mit Hilfe der vier Leistungshalbleiter ist entweder die an dem Energiespeicher abfallende Energiespeicherspannung, eine Nullspannung oder aber die zur Energiespeicherspannung inverse Spannung an den zwei Ausgangsklemmen jedes Submoduls erzeugbar. Durch die Reihenschaltung solcher Submodule ist jeder Umrichterzweig in der Lage, die an ihm abfallende Spannung stufenweise zu verändern, wobei die Höhe der Stufen durch die Spannung bestimmt ist, die an dem jeweiligen Energiespeicher abfällt.

Abweichend hiervon ist es jedoch auch möglich, einen zweistufigen Umrichter oder einen dreistufigen Umrichter im Rahmen der Erfindung einzusetzen. Vorteilhaft ist jedoch, dass die Leistungshalbleiter der steuerbaren Spannungsquelle sowohl von ihrer Sperrstellung in ihre Durchgangsstellung als auch von ihrer Durchgangsstellung in ihre Sperrstellung überführbar sind. Mit anderen Worten sind die eingesetzten Leistungshalbleiter sowohl ein- als auch abschaltbar. Abschaltbare Leistungshalbleiter, wie beispielsweise GTOs, IGBTs oder dergleichen, sind dem Fachmann auf diesem Gebiet jedoch bestens bekannt, so dass eine ausführliche Darstellung hier entfallen kann.

Das Ein- und Abschalten der Leistungshalbleiter der steuerbaren Spannungsquelle 3 erfolgt mittels der Regelungseinheit 4, die dies in Abhängigkeit gemessener Istgrößen und vorgegebener Sollgrößen durchführt. In Figur 1 sind als Eingangsgrößen für die Regelungseinheit 4 die Netzströme $i_{Netz}$ sowie die Kompensationsströme $i_{Komp}$ eingezeichnet. Dies ist deswegen ausreichend, da aufgrund der Knotenregel der Laststrom $i_{Last}$, der die zu kompensierenden Oberschwingungen enthält, rechnerisch ermittelt werden kann. Eine aufwändigere Messung des Verbraucherstroms $i_{Last}$ kann daher entfallen. Selbstverständlich ist es im Rahmen der Erfindung auch möglich, stattdessen den Verbraucherstrom und den Netzstrom zu messen. Darüber hinaus wird die Regelungseinheit 4 auch mit der Wechselspannung $u_{Netz}$ des Versorgungsnetzes 5 und mit der ebenfalls gemessenen Kompensationsspannung $u_{Komp}$ versorgt.

Figur 2 zeigt den schematischen Ablauf eines Ausführungsbeispiels des erfindungsgemäßen Verfahrens.

Im ersten Schritt wird aus den Messwerten des Netzstromes $i_{Netz}$ und des Kompensationsstromes $i_{Komp}$ der Verbraucherstrom $i_{Last}$ berechnet, der die unerwünschte Oberschwingung enthält. Im zweiten Schritt 9 wird von dem so erhaltenen Verbraucherstrom $i_{Last}$ der Grundschwingungsanteil durch einen Hochpass, eine Bandsperre oder durch ein Keilfilter abgedämpft. In dem, mit dem Bezugszeichen 10 versehenen Verfahrensschritt, werden aus der sinusförmigen Oberschwingung des Verbraucherstromes $i_{Last}$ zwei Parameter, beispielsweise Amplitude und Phase, ermittelt, die für eine feste Frequenz den Verlauf der Oberschwingung bestimmen. In dem mit dem Bezugszeichen 11 versehenen Verfahrensschritt werden ausgehend von dem Netzstrom $i_{Netz}$, dem Kompensationsstrom $i_{Komp}$ und der Stellspannung $u_{Komp}$ die Spannungen an Kapazitäten und die Ströme durch Spulen des passiven Filters 2 berechnet. Die so berechneten Spannungen und Ströme definieren den Zustand des passiven Filters 2. In Schritt 11 wird also der Zustand des passiven Filters 2 ermittelt.

Im Verfahrensschritt 12 wird mit Hilfe der Beschreibung des dynamischen Verhaltens des passiven Filters 2 eine Stellspannung $u_{Komp}$ so berechnet, dass die Abweichung zwischen dem gewünschten und dem zu erwartenden Kompensationsstrom $i_{Komp}$ innerhalb eines kurzen Zeitraums minimal wird. Auf diese Weise wird die problematische Schwingfähigkeit des passiven Filters 2 berücksichtigt.

Im Verfahrensschritt 13 werden aus der Stellspannung $u_{Komp}$ Steuerungssignale für die Leistungshalbleiter der steuerbaren Spannungsquelle 3 erzeugt und an diese übermittelt.

Ganz allgemein wird das dynamische Verhalten des Filters zum Abtastschritt k beschrieben mit

$$\underline{x}_{k+1}^{s} = \underline{A}^{s}\,\underline{x}_{k}^{s} + \underline{B}^{s}u_{Komp,k} \qquad\qquad (1)$$

$$\underline{i}_{k}^{s} = \underline{C}^{s}\,\underline{x}_{k}^{s} \qquad\qquad (2)$$

$\underline{x}^{s}$ ist der Vektor, der den oben beschriebenen Zustand des passiven Filters 2 ausdrückt. In dem hier im Folgenden betrachteten Fall weist das passive Filter lediglich eine Induktivität $L$ sowie einen Widerstand $R$ auf, die zueinander in Reihe angeordnet sind. Somit umfasst der Vektor $\underline{x}^{s}$ lediglich den durch die Spule des passiven Filters fließenden Strom. $\underline{A}^{s}$ ist eine Transformationsmatrix, die das Verhalten der Zustände des passiven Filters 2 beschreibt und wird bei dem besagten passiven Filter 2 zu

$$\underline{A}^{s} = e^{-\frac{R}{L}T_{A}}$$

$\underline{B}^{s}$ ist eine Transformationsmatrix, die den Einfluss der Stellspannung $u_{Komp}$ auf den Zustand des passiven Filters 2 beschreibt. Für das beschriebene Ausführungsbeispiel gilt

$$B^s = \frac{1 - e^{-\frac{R}{L}T_A}}{R}$$

$\underline{C}^s$ ist eine Transformationsmatrix, die aus den Zuständen des passiven Filters 2 einen ungestörten Strom $i^s$ im passiven Filter berechnet. Für das gewählte Ausführungsbeispiel gilt:

$$C^s = 1$$

Das passive Filter 2 weist eine in der Praxis endliche Impedanz auf. Der Kompensationsstrom wird daher nicht allein durch die beeinflussbare, steuerbare Spannungsquelle bestimmt. Vielmehr muss der Einfluss des Verbraucherstromes im Verbrauchernetz 5 berücksichtigt werden. Dieser wird hier als Störung aufgefasst, wobei die Störung ganz allgemein dargestellt wird als

$$\underline{x}^d_{k+1} = \underline{A}^d \, \underline{x}^d_k$$

$$i^d_k = \underline{C}^d \, \underline{x}^d_k$$

Das Verhalten der zwei Parameter des störenden Einflusses vom Verbraucherstrom $i_{Last}$ auf den Kompensationsstrom $i_{Komp}$ wird beschrieben, zu

$$\underline{A}^d = \begin{bmatrix} \cos(\omega T_A) & \frac{1}{\omega}\sin(\omega T_A) \\ \omega\sin(\omega T_A) & \cos(\omega T_A) \end{bmatrix},$$

wobei $\omega$ die Kreisfrequenz der Oberschwingung und $T_A$ die Abtastzeit darstellt. $\underline{C}^d$ ist eine Transformationsmatrix, die aus den zwei Parametern des Störeinflusses den zugehörigen Anteil $i^d$ im Kompensationsstrom $i_{Komp}$ berechnet. Für das Ausführungsbeispiel gilt:

$$\underline{C}^d = \begin{bmatrix} 1 & 0 \end{bmatrix}$$

Es wird angenommen, dass die Ursache für die Störung unbekannt ist, dass diese jedoch die gleiche Frequenz hat, wie die zu kompensierende Oberschwingung. Somit kann das Verhalten als Oszillator oder ungedämpftes Verzögerungsglied zweiter Ordnung dargestellt werden.

Der resultierende Kompensationsstrom ergibt sich aus der Überlagerung beider Größen. Es gilt:

$$i_{Komp} = i^s + i^d$$

Für $n_p$ zukünftige Abtastschritte ist der Regelfehler nun zu optimieren. Es ergibt sich folgende Optimierungsaufgabe:

$$\min_{u} \sum_{l=1}^{Np} \left(i_{soll,k+l} - i_{Komp,k+l}\right)^2 + \lambda \sum_{l=0}^{Nu} \left(u_{soll,k+l} - u_{Komp,k+l}\right)^2$$

mit:

$$i_{Komp,k+l} = \underline{C}^s \left(\underline{A}^s\right)^l \underline{x}_k^s + \underline{C}^d \left(\underline{A}^d\right)^l \underline{x}_k^d + \sum_{n=0}^{l} \underline{C}^s \left(\underline{A}^s\right)^{-n} \underline{B}^s u_{k+n}$$

$$i_{soll,k+l} = \underline{C}^d \left(\underline{A}^d\right)^l \underline{x}_k^{soll}$$

$$u_{soll,k+l} = \underline{C}^d \left(\underline{A}^d\right)^l \underline{T}\underline{x}_k^{soll}$$

$$u_{k+n} = \begin{cases} u_{Komp,k+n} \\ u_{soll,k+n} \end{cases} f\ddot{u}r \quad \begin{matrix} n < Nu \\ Nu \le n \le Np \end{matrix} \,,$$

wobei $u_{Soll}$ eine Stellspannung ist, die im ungestörten Fall den zur Kompensation der Oberschwingungen erforderlichen Kompensationsstrom erzeugt, $\underline{x}^{soll}$ ein Vektor ist, der Parameter zur Beschreibung der zu kompensierenden Oberschwingung umfasst, und $\underline{T}$ eine Transformationsmatrix ist, die auf $\underline{x}^{soll}$ angewandt die Stellspannung $u_{Soll}$ für den ungestörten Fall ergibt, wobei vorausgesetzt wird, dass die zu ermittelnde Kompensationsspannung $u_{Komp,k+n}$ nur für die ersten Nu Abtastschritte auf das passive Filter einwirkt und unschließend die störungsfreie Kompensationsspannung $u_{Soll}$.

Die Transformationsmatrix berechnet sich aus dem Betrag $A$ und der Phase des Frequenzganges $G(e^{j\omega T_A})$ des passiven Filters 2 für die Kreisfrequenz $\omega$. Unter der Annahme, dass

$$G\left(e^{j\omega T_A}\right) = \frac{B}{e^{j\omega T_A} - A}$$

$$A = \left|G\left(e^{j\omega T_A}\right)\right|$$

und

$$\varphi = \arg\left(G\left(e^{j\omega T_A}\right)\right)$$

sind, ergibt sich für $T$:

$$T = \frac{1}{A}\begin{bmatrix} \cos(\varphi) & -\dfrac{1}{\omega}\sin(\varphi) \\ -\omega\sin(\varphi) & \cos(\varphi) \end{bmatrix}.$$

Nun müssen noch Werte für $n_u$, $n_p$ und $\lambda$ nach Intuition festgelegt werden. Es hat sich gezeigt, dass $n_u$=10 und $\lambda$=0,001 und $n_p$ gleich die Anzahl an Abtastschritten pro Oberschwingungsperiode eine gute Wahl darstellt. Mit diesen Angaben kann das Optimierungsproblem aufgestellt und nach der unbekannten Stellgröße $u_{Komp}$ gelöst werden. Hieraus ergeben sich die Matrizen k1, k2 und k3, die als Regelparameter dem Regler zur Einstellung der Regelung zugeführt werden.

Gemäß dem beschriebenen Ausführungsbeispiel wird die Optimierungsaufgabe numerisch gelöst. Abweichend hiervon besteht im Rahmen der Erfindung jedoch auch die Möglichkeit der analytischen Lösung der Optimierungsaufgabe, wobei die Regelparameter K1, K2, K3 gemäß

$$u_{Komp,k} = K_1 x_k^s + K_2 x_k^d + K_3 x_k^{Soll}$$

dargestellt werden können.

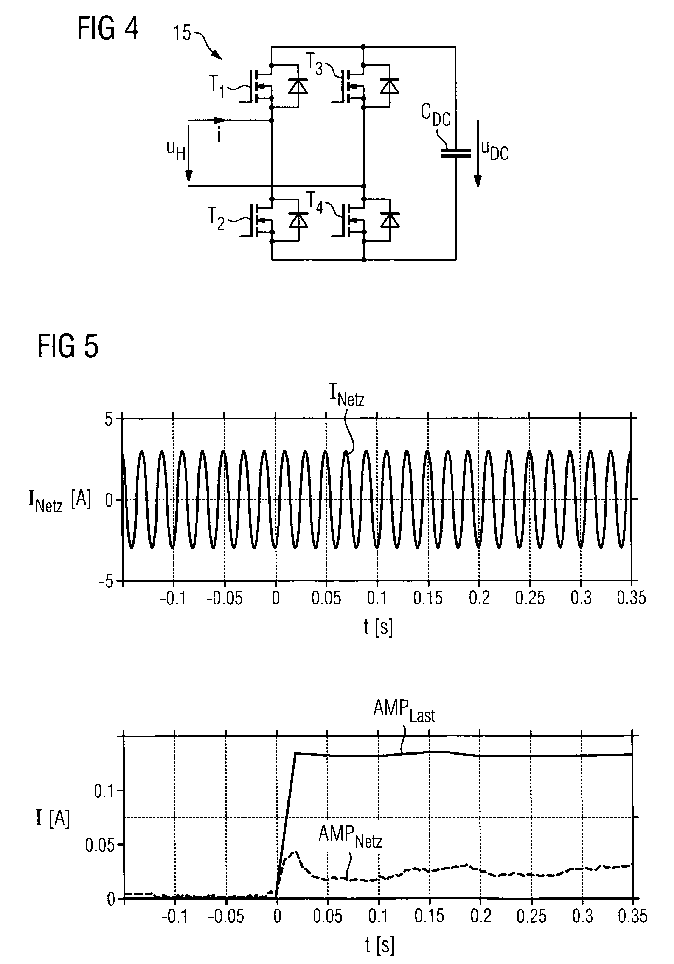

Figur 3 zeigt einen Testaufbau zur Anwendung eines Ausführungsbeispiels des erfindungsgemäßen Verfahrens. Als steuerbare Spannungsquelle 4 dient ein mehrstufiger Umrichter mit einer Reihenschaltung von zehn Submodulen, auf deren Aufbau im Zusammenhang mit Figur 4 noch genauer eingegangen werden wird.

Die Vorrichtung 1 ist in dem gezeigten Ausführungsbeispiel zweiphasig ausgeführt. Die steuerbare Spannungsquelle 4 ist über das passive Filter 2, das als Saugkreis mit einem Kondensator $C_{sk}$, einem ohmschen Widerstand $R_{sk}$ und einer Spule $L_{sk}$ ausgestaltet ist, mit einer Sammelschiene 14 verbunden. Die Sammelschiene 14 wird ausgehend von dem Versorgungsnetz 6 über einen Transformator Tr mit der Spannung $u_Q$ versorgt. Dabei wurde eine Leiter-Leiter Versorgungsspannung mit einem Effektivwert von $U_Q$=220 V mit einer Frequenz von 50 Hz gewählt, die den Netzstrom $I_{Netz}$ treibt. An der Sammelschiene 14 ist die Last 7 angeschlossen, die einen Oberschwingungsstrom in das Netz einprägt. Der Innenwiderstand des Versorgungsnetzes 5 wurde zu $R_Q$=4,83 $\Omega$ und $L_Q$=13,5 mH ermittelt. An den Bauteilen des passiven Filters 2 wurden die Kapazität $C_{SK}$=43,841 $\mu$F, der ohmsche Widerstand $R_{SK}$=0,854 $\Omega$ und die Induktivität $L_{SK}$=4,883 mH gemessen.

Figur 4 zeigt ein Submodul, das mit neun weiteren identisch aufgebauten Submodulen in Reihe geschaltet ist und auf diese Weise eines der Umrichterventile der steuerbaren Spannungsquelle 3 bildet. Es ist erkennbar, dass jedes Submodul als Zweipol ausgebildet ist und einen Kondensator $C_{DC}$ als Energiespeicher sowie eine Leistungshalbleiterschaltung 15 aufweist. Die Leistungshalbleiterschaltung 15 und der Energiespeicher $C_{DC}$ bilden eine so genannte H-Brücke aus. Als Halbleiter der Leistungshalbleiterschaltung wurden vier MOSFETs $T_1$, $T_2$, $T_3$ und $T_4$ ausgewählt. Kondensator $C_{DC}$ besitzt eine Gesamtkapazität von $C_{DC}$=2,4 mF. Die Spannung über jeden Kondensator $C_{DC}$ wird jeweils auf $u_{DC}$=20 V gehalten. Dies wird für jeden Kondensator durch einen Proportionalregler erreicht. Der Regler bildet die Differenz aus Sollwert und Istwert und multipliziert dies mit einer positiven Konstante. Anschließend wird die Ausgabe des Reglers mit einer Sinusschwingung, die in Frequenz und Phase dem Grundschwingungsstrom gleicht, multipliziert und als zusätzlicher Stellspannungsanteil vom Umrichter ausgegeben.

Die Halbleiterschalter $T_1$, $T_2$, $T_3$ und $T_4$ jeder H-Brücke werden durch eine trägerbasierte Pulsweitenmodulation angesteuert. Jedes dieser Trägersignale ist sägezahnförmig, mit einer Frequenz von 10 kHz und weist einen Phasenversatz von 36° zu seinen benachbarten Brücken auf.

Die Stromwerte der Last und des Umrichters werden mit einer Abtastrate von 10 kHz messtechnisch erfasst. Anschließend wird der Grundschwingungsanteil in den Messwerten mit folgendem zeitdiskreten Filter stark bedämpft:

$$\begin{bmatrix} x_1 \\ x_2 \\ x_3 \\ x_4 \end{bmatrix}_{k+1} = \begin{bmatrix} 0 & 0,00626 & 0 & -1 \\ 0 & 1,992753 & 1 & 0 \\ 0 & -0,993737 & 0 & 0 \\ 0 & 0,00626 & 0 & 0 \end{bmatrix} \begin{bmatrix} x_1 \\ x_2 \\ x_3 \\ x_4 \end{bmatrix}_k + \begin{bmatrix} 0,00626 \\ 1,992753 \\ -0,993737 \\ 0,00626 \end{bmatrix} u_k$$

$$y_{BS,k} = -x_{1,k} + u_k$$

Die nun gefilterten Messwerte werden an die Regelungseinheit 4 übergeben. Aus den Zuständen des passiven Filters 2 und der Oberschwingung wird die Stellgröße durch Multiplikation mit den Matrizen $K_1$, $K_2$ und $K_3$ berechnet und ausgegeben.

Figur 5 verdeutlicht die Wirkung des erfindungsgemäßen Verfahrens anhand gemessener Ströme. Hierbei wurde mit einem Leistungsverstärker als Last zum Zeitpunkt t=0 s eine Stromoberschwingung der Ordnung 15 mit einer Amplitude von 150 mA in das in Figur 4 gezeigte System eingeprägt. Im oberen Teil der Figur 5 ist der Verlauf des Netzstromes $I_{Netz}$ dargestellt. Der Oberschwingungsstrom ist jedoch kaum zu erkennen. Deshalb wurde in dem unteren Teil der Figur 5 die Amplitude AMP dieses Oberschwingungsstromes sowohl aus dem Last- als auch dem Netzstrom als $AMP_{Last}$ beziehungsweise $AMP_{Netz}$ dargestellt. Es ist gut zu erkennen, dass es nur eine Netzperiode, bei einer Grundschwingung der Netzspannung von 50 Hz also 20 ms dauert, bis die Oberschwingung ausreichend bedämpft wird.

**Patentansprüche**

1. Vorrichtung (1) zur Kompensation von in Stromverläufen auftretenden Oberschwingungen in einem Hochspannungsnetz (5) mit einem passiven Filter (2) und einer steuerbaren Spannungsquelle (3), die über das passive Filter (2) mit dem Hochspannungsnetz (5) in Parallelschaltung verbindbar ist, und mit einer Regelungseinheit (4), die in Abhängigkeit der erfassten Oberschwingungen einen Sollstrom $i_{Soll}$ ermittelt, welcher der negativen zu kompensierenden Oberschwingung entspricht, wobei der Sollstrom $i_{Soll}$ mit einem von der steuerbaren Spannungsquelle (3) erzeugten Kompensationsstrom $i_{Komp}$ unter Gewinnung einer Regeldifferenz verglichen wird und die Regeldifferenz einem über Reglerparameter (K1, K2, K3) in seinem dynamischen Verhalten einstellbaren Regler zugeführt wird, der an seinem Ausgang eine Stellspannung $u_{Komp}$ für die steuerbare Spannungsquelle (3) bereitstellt, so dass diese einen Kompensationsstrom $i_{Komp}$ treibt, der dem Sollstrom $i_{Soll}$ möglichst entspricht, **dadurch gekennzeichnet, dass** die Regelungseinheit (4) Mittel zum Modellieren der Dynamik des passiven Filters (2) aufweist, und dass die Mittel zum Modellieren der Dynamik des passiven Filters (2) Reglerparameter (K1, K2, K3) bereitstellen, wobei der Regler mit Hilfe der Reglerparameter (K1, K2, K3) so eingestellt ist, dass Eigenschwingungen des passiven Filters (2) vermieden sind.

2. Vorrichtung (1) nach Anspruch 1, **dadurch gekennzeichnet, dass** die Regelungseinheit (4) Zustandserfassungsmittel aufweist, die einen Istzustand des passiven Filters (2) ermitteln.

3. Vorrichtung (1) nach Anspruch 1 oder 2, **dadurch gekennzeichnet, dass** die steuerbare Spannungsquelle (4) über einen Umrichter mit abschaltbaren Leistungshalbleitern verfügt.

4. Vorrichtung (1) nach Anspruch 3, **dadurch gekennzeichnet, dass** der Umrichter ein selbstgeführter mehrstufiger Umrichter ist.

5. Verfahren zur Kompensation von in Stromverläufen auftretenden Oberschwingungen in einem Hochspannungsnetz (5) mittels einer steuerbaren Spannungsquelle (3), die über ein passives Filter (2) in Parallelschaltung mit dem Hochspannungsnetz (5) verbunden ist, bei dem ein die unerwünschten Oberschwingungen aufweisender Verbraucherstrom $i_{Last}$ erfasst, in Abhängigkeit des Verbraucherstroms $i_{Last}$ ein die Oberschwingungen kompensierender Sollstrom $i_{Soll}$ ermittelt, der Sollstrom $i_{Soll}$ mit einem von der steuerbaren Spannungsquelle (3) erzeugten Kompensationsstrom $i_{Komp}$ unter Gewinnung einer Regeldifferenz verglichen und die Regeldifferenz einem über Reglerparameter (K1, K2, K3) in seinem dynamischen Verhalten einstellbaren Regler zugeführt wird, der an seinem Ausgang eine Stellspannung $u_{Komp}$ für die steuerbare Spannungsquelle (3) bereitstellt, so dass diese einen Kompensationsstrom $i_{Komp}$ treibt, der dem Sollstrom $i_{Soll}$ möglichst entspricht, **dadurch gekennzeichnet, dass** die dynamischen Eigenschaften des passiven Filters (2) modelliert werden und die Reglerparameter (K1, K2, K3) auf der Grundlage der berechneten dynamischen Eigenschaften des passiven Filters fortwährend so hergeleitet werden, dass Eigenschwingungen des passiven Filters (2) vermieden sind.

6. Verfahren nach Anspruch 5, **dadurch gekennzeichnet, dass** die dynamischen Eigenschaften des passiven Filters (2) ausgehend von einem Istzustand des passiven Filter (2) modelliert werden.

7. Verfahren nach Anspruch 6, **dadurch gekennzeichnet, dass** der Istzustand des passiven Filters (2) mit Hilfe von ermittelten Strömen und Induktivitäten des passiven Filters und/oder Spannungen festgelegt, die an Kapazitäten des passiven Filters (2) abfallen.

8. Verfahren nach einem der Ansprüche 5 bis 7, **dadurch gekennzeichnet, dass** das dynamische Verhalten des passiven Filters zeitdiskret zu konstanten Abtastzeitpunkten k mit Hilfe von Transformationsmatrizen modelliert wird.

9. Verfahren nach Anspruch 8,
   **dadurch gekennzeichnet, dass** das dynamische Verhalten des passiven Filters (2) gemäß

$$\underline{x}^{s}_{k+1} = \underline{A}^{s}\,\underline{x}^{s}_{k} + \underline{B}^{s} u_{Komp,k}$$

$$\underline{i}^{s}_{k} = \underline{C}^{s}\,\underline{x}^{s}_{k}$$

beschrieben wird, wobei $x^s$ ein Vektor ist, der den Istzustand des passiven Filters (2) beschreibt, $\underline{A}^s$ eine Transformationsmatrix ist, welche die Dynamik der Zustände des passiven Filters (2) beschreibt, $\underline{B}^s$ eine Transformationsmatrix ist, die den Einfluss der Kompensationsspannung $u_{Komp}$ auf den Zustand des passiven Filters (2) beschreibt, und $\underline{C}^s$ eine Transformationsmatrix ist, welche aus dem Zustand des passiven Filters einen ungestörten Strom $i^s$ im passiven Filter berechnet.

10. Verfahren nach Anspruch 9,
    **dadurch gekennzeichnet, dass** ein von dem Hochspannungsnetz (5) eingeprägter Strom gemäß

$$\underline{x}^{d}_{k+1} = \underline{A}^{d}\,\underline{x}^{d}_{k}$$

$$i^{d}_{k} = \underline{C}^{d}\,\underline{x}^{d}_{k}$$

als Störung berücksichtigt wird, wobei $x^d$ ein Vektor mit Parametern ist, die den störenden Einfluss des Verbraucherstromes $i_{Last}$ auf den Kompensationsstrom $i_{Komp}$ beschreiben, $\underline{A}^d$ eine Transformationsmatrix ist, die das Verhalten der Parameter des störenden Einflusses von $i_{Last}$ auf den Kompensationsstrom $i_{Komp}$ beschreibt, und $\underline{C}^d$ eine Transformationsmatrix ist, die aus den besagten Parametern des störenden Einflusses den zugehörigen *Störstromanteil $i^d$* im Kompensationsstrom $i_{Komp}$ berechnet, wobei sich der Kompensationsstrom $i_{Komp}$ aus der Summe der des Störstromanteils $i^d$ und des störungsfreien Filterstromes $i^s$ gemäß $i_{Komp} = i^s + i^d$ ergibt.

11. Verfahren nach Anspruch 10,
    **dadurch gekennzeichnet, dass** das dynamische Verhalten des passiven Filters (2) durch die Lösung folgender Optimierungsaufgabe berücksichtigt wird:

$$\min_{u} \sum_{l=1}^{Np}\left(i_{soll,k+l} - i_{Komp,k+l}\right)^2 + \lambda \sum_{l=0}^{Nu}\left(u_{soll,k+l} - u_{Komp,k+l}\right)^2$$

mit:

$$i_{Komp,k+l} = \underline{C}^{s}\left(\underline{A}^{s}\right)^{l}\underline{x}^{s}_{k} + \underline{C}^{d}\left(\underline{A}^{d}\right)^{l}\underline{x}^{d}_{k} + \sum_{n=0}^{l}\underline{C}^{s}\left(\underline{A}^{s}\right)^{-n}\underline{B}^{s}u_{k+n}$$

$$i_{soll,k+l} = \underline{C}^{d}\left(\underline{A}^{d}\right)^{l}\underline{x}^{soll}_{k}$$

$$u_{soll.k+1} = \underline{C}^d \left( \underline{A}^d \right) \underline{T} \underline{x}_k^{soll}$$

$$u_{k+n} = \begin{cases} u_{Komp.k+n} \\ u_{soll.k+n} \end{cases} f\ddot{u}r \quad \begin{matrix} n < Nu \\ Nu \le n \le Np \end{matrix} \,,$$

wobei $u_{Soll}$ eine Stellspannung ist, die im ungestörten Fall den zur Kompensation der Oberschwingungen erforderlichen Kompensationsstrom erzeugt, $\underline{x}^{soll}$ ein Vektor ist, der Parameter zur Beschreibung der zu kompensierenden Oberschwingung umfasst, und $\underline{T}$ eine Transformationsmatrix ist, die auf $\underline{x}^{soll}$ angewandt die Stellspannung $u_{Soll}$ für den ungestörten Fall ergibt, wobei vorausgesetzt wird, dass die zu ermittelnde Kompensationsspannung $uK_{omp,k+n}$ nur für die ersten Nu Abtastschritte auf das passive Filter einwirkt und anschließend die störungsfreie Kompensationsspannung $u_{Soll}$.

12. Verfahren nach Anspruch 11,
**dadurch gekennzeichnet, dass** die Optimierungsaufgabe unter der Berücksichtigung von Stellgrößenbegrenzungen numerisch gelöst wird, wobei Reglerparameter $K_n$ bereitgestellt werden, die dem Regler zur Anpassung der Regelung zugeführt werden.

13. Verfahren nach Anspruch 11,
**dadurch gekennzeichnet, dass** die Optimierungsaufgabe analytisch gelöst wird, wobei sich die zur ermittelnde Kompensationsspannung $u_{Komp}$ gemäß,

$$u_{Komp.k} = K_1 x_k^s + K_2 x_u^a + K_3 x_k^{Soll}$$

berechnet wird, wobei $K_1$, $K_2$ und $K_3$ Reglerparameter sind, die dem Regler zur Anpassung der Regelung zugeführt werden.

**Claims**

1. Device (1) for the compensation of harmonics that occur in current profiles in a high-voltage mains system (5) comprising a passive filter (2) and a controllable voltage source (3), which can be connected in parallel connection to the high-voltage mains system (5) via the passive filter (2), and comprising a closed-loop control unit (4), which determines a desired current $i_{desired}$ depending on the harmonics detected, said desired current corresponding to the negative harmonic to be compensated for, wherein the desired current $i_{desired}$ is compared with a compensation current $i_{comp}$ generated by the controllable voltage source (3), with a control difference being obtained, and the control difference is fed to a controller, the dynamic behaviour of which is adjustable by means of controller parameters (K1, K2, K3) and which provides at its output an actuating voltage $u_{comp}$ for the controllable voltage source (3), such that the latter drives a compensation current $i_{comp}$ corresponding as far as possible to the desired current $i_{desired}$,
**characterized in that**
the closed-loop control unit (4) has means for modelling the dynamic range of the passive filter (2), and **in that** the means for modelling the dynamic range of the passive filter (2) provide controller parameters (K1, K2, K3), wherein the controller is set with the aid of the controller parameters (K1, K2, K3) such that natural oscillations of the passive filter (2) are avoided.

2. Device (1) according to Claim 1,
**characterized in that**
the closed-loop unit (4) has state detection means which determine an actual state of the passive filter (2).

3. Device (1) according to Claim 1 or 2,
**characterized in that**

the controllable voltage source (4) has a converter with power semiconductors that can be turned off.

4. Device (1) according to Claim 3,
   **characterized in that**
   the converter is a self-commutated multilevel converter.

5. Method for the compensation of harmonics that occur in current profiles in a high-voltage mains system (5) by means of a controllable voltage source (3), which is connected in parallel connection to the high-voltage mains system (5) via a passive filter (2), wherein a load current $i_{load}$ having the undesired harmonics is detected, a desired current $i_{desired}$ that compensates for the harmonics is determined depending on the load current $i_{load}$, the desired current $i_{desired}$ is compared with a compensation current $i_{comp}$ generated by the controllable voltage source (3), with a control difference being obtained, and the control difference is fed to a controller, the dynamic behavior of which is adjustable by means of controller parameters (K1, K2, K3) and which provides at its output an actuating voltage $u_{comp}$ for the controllable voltage source (3), such that the latter drives a compensation current $i_{comp}$ that corresponds as far as possible to the desired current $i_{desired}$,
   **characterized in that**
   the dynamic properties of the passive filer (2) are modelled and the controller parameters (K1, K2, K3) are continuously derived on the basis of the calculated dynamic properties of the passive filter such that natural oscillations of the passive filter (2) are avoided.

6. Method according to Claim 5,
   **characterized in that**
   the dynamic properties of the passive filter (2) are modelled proceeding from an actual state of the passive filter (2).

7. Method according to Claim 6,
   **characterized in that**
   the actual state of the passive filter (2) is defined with the aid of determined currents and inductances of the passive filter and/or voltages dropped across capacitances of the passive filter (2).

8. Method according to any of Claims 5 to 7,
   **characterized in that**
   the dynamic behaviour of the passive filter is modelled in a time-discrete fashion at constant sampling instants k with the aid of transformation matrices.

9. Method according to Claim 8,
   **characterized in that**
   the dynamic behaviour of the passive filter (2) is described in accordance with

$$\underline{x}_{k+1}^{s} = \underline{A}^{s}\,\underline{x}_{k}^{s} + \underline{B}^{s}u_{comp,k}$$

$$\underline{i}_{k}^{s} = \underline{C}^{s}\,\underline{x}_{k}^{s}$$

wherein $\underline{x}^s$ is a vector describing the actual state of the passive filter (2), $\underline{A}^s$ is a transformation matrix describing the dynamic range of the states of the passive filter (2), $\underline{B}^s$ is a transformation matrix describing the influence of the compensation voltage $u_{comp}$ on the state of the passive filter (2), and $\underline{C}^s$ is a transformation matrix which calculates an undisturbed current $i^s$ in the passive filter from the state of the passive filter.

10. Method according to Claim 9,
    **characterized in that**
    a current impressed by the high voltage mains system (5) in accordance with

$$\underline{x}^d_{k+1} = \underline{A}^d \, \underline{x}^d_k$$

$$i^d_k = \underline{C}^d \, \underline{x}^d_k$$

is taken into account as a disturbance, wherein $\underline{x}^d$ is a vector having parameters describing the disturbing influence of the load current $i_{load}$ on the compensation current $i_{comp}$, $\underline{A}^d$ is a transformation matrix describing the behaviour of the parameters of the disturbing influence of $i_{load}$ on the compensation current $i_{comp}$, and $\underline{C}^d$ is a transformation matrix that calculates, from the stated parameters of the disturbing influence, the associated disturbing current component $i^d$ in the compensation current $i_{comp}$, wherein the compensation current $i_{comp}$ results from the sum of the disturbing current component $i^d$ and the disturbance-free filter current $i^s$ in accordance with $i_{comp} = i^s + i^d$.

**11.** Method according to Claim 10,
**characterized in that**
the dynamic behaviour of the passive filter (2) is taken into account by the solution of the following optimization problem:

$$\min_u \sum_{l=1}^{Np} (i_{desired.k+1} - i_{comp.k+1})^2 + \lambda \sum_{l=0}^{Nu} (u_{desired.k+1} - u_{comp.k+1})^2$$

where:

$$i_{comp.k+1} = \underline{C}^s \left( \underline{A}^s \right)^l \underline{x}^s_k + \underline{C}^d \left( \underline{A}^d \right)^l \underline{x}^d_k + \sum_{n=0}^{l} \underline{C}^s \left( \underline{A}^s \right)^{-n} \underline{B}^s u_{k+n}$$

$$i_{desired.k+1} = \underline{C}^d \left( \underline{A}^d \right)^l \underline{x}^{desired}_k$$

$$i_{desired.k+1} = \underline{C}^d \left( \underline{A}^d \right)^l \underline{T} \underline{x}^{desired}_k$$

$$u_{k+n} = \begin{cases} u_{comp.k+n} \\ u_{desired.k+n} \end{cases} for \quad \begin{array}{c} n < Nu \\ Nu \le n \le Np \end{array}$$

wherein $u_{desired}$ is an actuating voltage which, in the undisturbed case, generates the compensation current required for the compensation of the harmonics, $x^{desired}$ is a vector comprising parameters for describing the harmonic to be compensated for, and $\underline{T}$ is a transformation matrix which, where applied to $\underline{x}^{desired}$, produces the actuating voltage $u_{desired}$ for the undisturbed case, wherein it is assumed that the compensation voltage $u_{comp.k+n}$ to be determined has an effect on the passive filter only for the first Nu sampling steps, and subsequently the disturbance-free compensation voltage $u_{desired}$.

**12.** Method according to Claim 11,
**characterized in that**
the optimization problem is solved numerically taking account of manipulated variable limitations, wherein controller parameters $K_n$ are provided which are fed to the controller for adapting the closed-loop control.

**13.** Method according to Claim 11,
**characterized in that**
the optimization problem is solved analytically, wherein the compensation voltage $u_{comp}$ to be determined is calculated in accordance with

$$u_{comp.k} = K_1 x_k^s + K_2 x_u^a + K_3 x_k^{desired}$$

wherein $K_1$, $K_2$ and $K_3$ are controller parameters which are fed to the controller for adapting the closed-loop control.

## Revendications

**1.** Dispositif ( 1 ) de compensation d'harmoniques se produisant dans des voies de courant dans un réseau ( 5 ) de haute tension, comprenant un filtre ( 2 ) passif et une source ( 3 ) de tension, qui peut être commandée et qui peut être reliée en un circuit en parallèle au réseau ( 5 ) de haute tension par le filtre ( 2 ) passif, et comprenant une unité ( 4 ) de régulation, qui détermine, en fonction des harmoniques détectées, un courant $i_{Soll}$ de consigne, qui correspond à l'harmonique négative à compenser, le courant $i_{Soll}$ de consigne étant comparé à un courant $i_{Komp}$ de compensation produit par la source ( 3 ) de tension pouvant être commandée, en obtenant une différence de régulation, et la différence de régulation étant envoyée à un régulateur réglable dans son comportement dynamique par un paramètre ( K1, K2, K3 ) de régulateur, qui met à dispositif à sa sortie une tension $u_{Komp}$ de réglage pour la source ( 3 ) de tension pouvant être commandée, de sorte que celle-ci donne un courant $i_{Komp}$ de compensation, qui correspond le plus possible au courant $i_{Soll}$ de consigne,
**caractérisé en ce que**
l'unité ( 4 ) de régulation a des moyens de modélisation de la dynamique du filtre ( 2 ) passif et **en ce que** les moyens de modélisation de la dynamique du filtre ( 2 ) passif mettent à disposition des paramètres ( K1, K2, K3 ) de régulateur, le régulateur étant réglé à l'aide des paramètres ( K1, K2, K3 ) de régulateur, de manière à éviter des oscillations propres du filtre ( 2 ) passif.

**2.** Dispositif ( 1 ) suivant la revendication 1,
**caractérisé en ce que** l'unité ( 4 ) de régulation a des moyens de détection d'état, qui déterminent un état réel du filtre ( 2 ) passif.

**3.** Dispositif ( 1 ) suivant la revendication 1 ou 2,
**caractérisé en ce que** la source ( 4 ) de tension, qui peut être commandée, dispose d'un convertisseur de fréquence ayant des semiconducteurs de puissance, qui peuvent être bloqués.

**4.** Dispositif ( 1 ) suivant la revendication 3,
**caractérisé en ce que** le convertisseur de puissance est un convertisseur à commutation automatique à plusieurs étages.

**5.** Procédé de compensation d'harmoniques se produisant dans des voies de courant dans un réseau ( 5 ) de haute tension au moyen d'une source ( 3 ) de tension, qui peut être commandée et qui est reliée dans un circuit en parallèle au réseau ( 5 ) de haute tension par un filtre ( 2 ) passif, dans lequel on détecte un courant $i_{Last}$ d'utilisateur ayant les harmoniques qui ne sont pas souhaitées, on détermine, en fonction du courant $i_{Last}$ d'utilisateur un courant $i_{Soll}$ de consigne compensant les harmoniques, on compare le courant $i_{Soll}$ de consigne à un courant $i_{Komp}$ de compensation produit par la source ( 3 ) de tension, qui peut être commandée en obtenant une différence de régulation et on envoie la différence de régulation à un régulateur pouvant être réglé dans son comportement dynamique par des paramètres ( K1, K2, K3 ) de régulateur, qui met à disposition à sa sortie une tension $u_{Komp}$ de réglage pour la source ( 3 ) de tension, qui peut être commandée, de sorte que celle-ci fournit un courant $i_{Komp}$ de compensation, qui correspond le plus possible au courant $i_{Soll}$ de consigne,

**caractérisé en ce que**
on modélise les propriétés dynamiques du filtre ( 2 ) passif et on déduit continuellement les paramètres ( K1, K2, K3 ) de régulateur sur la base des propriétés dynamiques calculées du filtre passif, de manière à empêcher des oscillations propres du filtre ( 2 ) passif.

6. Procédé suivant la revendication 5,
   **caractérisé en ce que**
   on modélise les propriétés dynamiques du filtre ( 2 ) passif à partir d'un état réel du filtre ( 2 ) passif.

7. Procédé suivant la revendication 6,
   **caractérisé en ce que**
   on constate l'état réel du filtre ( 2 ) passif à l'aide de courants déterminés et d'inductances du filtre passif et/ou de tensions, qui chutent aux bornes de capacités du filtre ( 2 ) passif.

8. Procédé suivant l'une des revendications 5 à 7,
   **caractérisé en ce que**
   on modélise le comportement dynamique du filtre passif d'une manière discrète dans le temps à des instants k d'échantillonnage constants à l'aide de matrices de transformation.

9. Procédé suivant la revendication 8,
   **caractérisé en ce que**
   on décrit le comportement dynamique du filtre ( 2 ) passif suivant

$$\underline{x}^s_{k+1} = \underline{A}^s \, \underline{x}^s_k + \underline{B}^s u_{Komp,k}$$

$$\underline{i}^s_k = \underline{C}^s \, \underline{x}^s_k$$

dans lesqsuelles $\underline{x}^s$ est un vecteur, qui décrit l'état réel du filtre ( 2 ) passif, $\underline{A}^s$ est une matrice de transformation, qui décrit la dynamique des états du filtre ( 2 ) passif, $\underline{B}^s$ est une matrice de transformation, qui décrit une influence de la tension $i_{Komp}$ de compensation sur l'état du filtre ( 2 ) passif et $\underline{C}^s$ est une matrice de transformation, qui calcule un courant $i^s$ non déformé dans le filtre passif à partir de l'état du filtre passif.

10. Procédé suivant la revendication 9,
    **caractérisé en ce que**
    on prend en compte comme perturbation un courant imprimé par le réseau ( 5 ) de haute tension suivant

$$\underline{x}^d_{k+1} = \underline{A}^d \, \underline{x}^d_k$$

$$\underline{i}^d_k = \underline{C}^d \, \underline{x}^d_k$$

dans lesquelles $\underline{x}^d$ est un vecteur ayant des paramètres, qui décrivent l'influence perturbatrice du courant $i_{Last}$ d'utilisateur sur le courant $i_{Komp}$ de compensation, $\underline{A}^d$ est une matrice de transformation, qui décrit le comportement des paramètres de l'influence perturbatrice de $i_{Last}$ sur le courant $i_{Komp}$ de compensation et $\underline{C}^d$ est une matrice de transformation, qui calcule à partir desdits paramètres de l'influence perturbatrice la proportion $i^d$ de courant parasite associée dans le courant $i_{Komp}$ de compensation, le courant $i_{Komp}$ de compensation étant donné par la somme de la proportion $i^d$ de courant perturbatrice et du courant $i^s$ de filtre sans perturbation suivant $i_{Komp} = i^s + i^d$.

11. Procédé suivant la revendication 10,
    **caractérisé en ce que**

on prend en compte le comportement dynamique du filtre ( 2 ) passif par la solution du problème d'optimisation suivant :

$$\min_{u} \sum_{l=1}^{Np} \left( i_{soll,k+l} - i_{Komp,k+l} \right)^2 + \lambda \sum_{l=0}^{Nu} \left( u_{soll,k+l} - u_{Komp,k+l} \right)^2$$

avec :

$$i_{Komp,k+l} = \underline{C}^s \left( \underline{A}^s \right)^l \underline{x}_k^s + \underline{C}^d \left( \underline{A}^d \right)^l \underline{x}_k^d + \sum_{n=0}^{l} \underline{C}^s \left( \underline{A}^s \right)^{l-n} \underline{B}^s u_{k+n}$$

$$i_{soll,k+l} = \underline{C}^d \left( \underline{A}^d \right)^l \underline{x}_k^{soll}$$

$$u_{soll,k+l} = \underline{C}^d \left( \underline{A}^d \right)^l \underline{T} \underline{x}_k^{soll}$$

$$u_{k+n} = \begin{cases} u_{Komp,k+n} & n < Nu \\ u_{soll,k+n} & Nu \le n \le Np \end{cases} ,$$

dans lesquelles $u_{Soll}$ est une tension de réglage, qui produit, dans le cas non perturbé, le courant de compensation nécessaire à la compensation des harmoniques, $\underline{x}^{soll}$ est un vecteur, qui comprend des paramètres de description de l'harmonique compensée, et $\underline{T}$ est une matrice de transformation, qui, appliquée à $\underline{x}^{soll}$ donne la tension $u_{Soll}$ de réglage, pour le cas non perturbé, en supposant que la tension $u_{Komp,k+n}$ de compensation à déterminer n'agit que pour les Nu premiers stades d'échantillonnage sur le filtre passif et ensuite la tension $u_{Soll}$ de compensation sans perturbation.

12. Procédé suivant la revendication 11,
    **caractérisé en ce que**
    on résout numériquement le problème d'optimisation en tenant compte de limites de grandeur de réglage des paramètres $K_n$ de régulateur qui sont envoyés au régulateur pour l'adaptation de la régulation étant mises à disposition.

13. Procédé suivant la revendication 11,
    **caractérisé en ce que**
    on résout analytiquement le problème d'optimisation, la tension $u_{Komp}$ de compensation à déterminer étant calculée suivant

$$u_{Komp,k} = K_1 x_k^s + K_2 x_u^a + K_3 x_k^{Soll}$$

dans laquelle $K_1$, $K_2$ et $K_3$ sont des paramètres de régulateur, qui sont envoyés au régulateur pour l'adaptation de la régulation.

FIG 1

FIG 2

FIG 3

# FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003169109 A1
- US 5757099 A
- US 2005035815 A1
- EP 1253694 A
- DE 10244056 B3
- DE 102004019518 A1
- WO 9967868 A
- US 5642275 A